# EUROPÄISCHE PATENTSCHRIFT

(11) **EP 0 249 132 B1**
(45) Veröffentlichungstag und Bekanntmachung des Hinweises auf die Patenterteilung: **25.08.1993**
(21) Anmeldenummer: 87107981.0
(22) Anmeldetag: 02.06.1987
(51) Int. Cl.: G06F 7/50

(54) **Anordnung zur bitparallelen Addition von Binärzahlen mit Carry-Save Überlaufkorrektur**
Arrangement for the bit-parallel addition of binary numbers with carry save overflow correction
Montage pour l'addition de bits en parallèle de nombre binaires avec correction de débordement par sauvegarde des retenues

(30) Priorität: 10.06.1986 DE 3619437
(43) Veröffentlichungstag der Anmeldung: 16.12.1987
(73) Patentinhaber: SIEMENS AKTIENGESELLSCHAFT, 80333 München (DE)
(72) Erfinder: De Man, Erik, D-8000 München 83 (DE); Noll, Tobias, D-8000 München 80 (DE)

(56) Entgegenhaltungen:
- EP-A- 0 208 275
- K. HWANG: "Computer Arithmetic", 1979, Seiten 98-103, John Wiley & Sons, New York, US
- IEEE TRANSACTIONS ON COMMUNICATIONS TECHNOLOGY, Band COM-18, Nr. 5, Oktober 1970, Seiten 625-632, New York, US; A. LENDER: "Decision-directed digital adaptive equalization technique for high-speed data transmission"

## Beschreibung

Die Erfindung bezieht sich auf eine Anordnung zur bitparallelen Addition von Binärzahlen im Zweierkomplement mit Carry-Save Überlaufkorrektur nach dem Oberbegriff des Patentanspruchs 1.

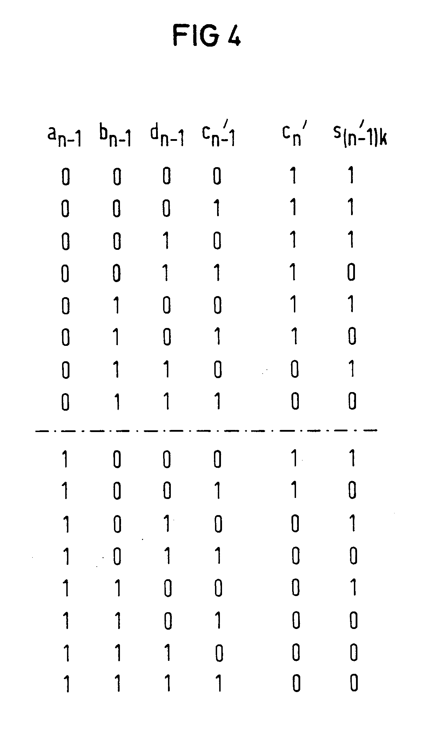

Eine Anordnung zur bitparallelen Addition von Binärzahlen im Zweierkomplement ist aus dem Buch "Computer Arithmetic" von K.Hwang, Verlag John Wiley and Sons, New York, 1979, S. 98-103, insbesondere Fig. 4.2, bekannt. Hierbei weist jeder erste Addierer drei Eingänge auf, die jeweils mit gleichwertigen Bits dreier miteinander zu addierender Binärzahlen belegt sind. Die Summenausgänge der ersten Addierer sind an erste Eingänge der Addiereinrichtung geführt, die Übertragsausgänge der ersten Addierer (mit Ausnahme des höchstwertigen Addierers) an zweite Eingänge der Addiereinrichtung. An den Ausgängen der letzteren erscheint ein Summenwort als Ergebnis der Addition. Zum Unterschied von einer Addiereranordnung mit Übertragsdurchlauf ("Carry-Propagate"-Prinzip) werden hier die Überträge aller ersten Addierer bei einer Addition von drei Binärzahlen gleichzeitig gebildet und stehen als Übertragswort neben dem an den ersten Addierern abgegriffenen Zwischensummenwort für eine Addition in der Addiereinrichtung zur Verfügung. Eine in dieser Weise aufgebaute Addiereranordnung arbeitet nach dem sog. "Carry-Save"-Prinzip.

Bei einer "Carry-Save"-Anordnung zur Addition von Binärzahlen im Zweierkomplement kann wegen der getrennten Darstellung der von den ersten Addierern gelieferten Summe in Form eines Zwischensummenworts und eines Übertragsworts ein Überlaufeffekt auftreten, der zu einem falschen Additionsergebnis bzw. Summenwort führt. Ein solcher Fehler entsteht dann, wenn relativ kleine Summenworte aus größeren Zwischensummenworten und Übertragsworten mit entgegengesetzten Vorzeichen gebildet werden.

In der EP-A-0 208 275 die als Stand der Technik nach Artikel 54 (3) EPÜ zu bewerten ist, wird eine Anordnung mit Carry-Save Überlaufkorrektur nach dem Oberbegriff des Patentanspruchs 1 beschrieben, bei der der Überlaufeffekt nicht mehr auftritt. Bei dieser Anordnung werden die Zwischensummen- und Übertragsworte, die den genannten Überlaufeffekt und damit einen Additionsfehler hervorrufen würden, durch einfache Korrekturmaßnahmen lediglich im Bereich der beiden höchstwertigen ersten Addierer in eine Form gebracht, die das Auftreten von fehlerhaften Additionsergebnissen sicher vermeidet. Dem ersten Addierer höchster Wertigkeit ist dabei ein Korrekturglied zugeordnet, das zusammen mit ihm in einer CMOS-Anordnung integriert ist.

Der Erfindung liegt die Aufgabe zugrunde, eine Anordnung der eingangs genannten Art anzugeben, bei der der Überlaufeffekt nicht auftritt und die aus möglichst einfachen, schnellen und platzsparenden Addierschaltungen aufgebaut ist. Das wird erfindungsgemäß durch eine Ausbildung der Anordnung nach dem kennzeichnenden Teil des Patentanspruchs 1 erreicht. Der mit der Erfindung erzielbare Vorteil besteht insbesondere darin, daß der höchstwertige Addierer mit dem Korrekturglied in einer einfachen CMOS-Anordnung integriert ist und daß diese Anordnung sowie alle übrigen Addierer jeweils die gleiche Anzahl von Transistoren haben.

Die Erfindung wird nachfolgend anhand von bevorzugten, in der Zeichnung dargestellten Ausführungsbeispielen näher erläutert. Dabei zeigt:
- Fig. 1: eine Anordnung zur bitparallelen Addition dreier Binärzahlen,
- Fig. 2: eine Funktionstabelle für eine Addierstufe ohne Korrekturglied,
- Fig. 3: eine CMOS Realisierung einer Addierstufe ohne Korrekturglied nach der Funktionstabelle in Fig. 2,
- Fig. 4: eine Funktionstabelle für die höchstwertige Addierstufe mit Korrekturglied,
- Fig. 5: eine erfindungsgemäße CMOS-Realisierung der durch die Funktionstabelle in Fig. 5 beschriebenen höchstwertigen Addierstufe mit Korrekturglied.

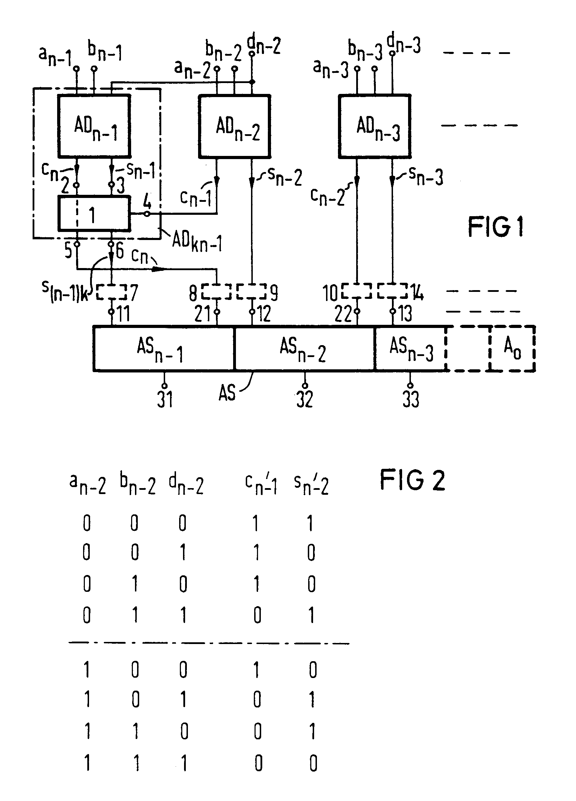

In Fig. 1 sind drei Addierer ADₙ₋₁, ADₙ₋₂ und ADₙ₋₃ dargestellt, die jeweils drei Eingänge aufweisen. Der erste Eingang von ADₙ₋₁ ist mit dem höchstwertigen Bit aₙ₋₁ einer n-stelligen, im Zweierkomplement dargestellten Binärzahl A belegt, der erste Eingang von ADₙ₋₂ mit aₙ₋₂ und der erste Eingang von ADₙ₋₃ mit aₙ₋₃. Die ersten Eingänge weiterer nicht dargestellter Addierer sind mit den weiteren Bits aₙ₋₄ bis a₀ belegt. In analoger Weise sind zweite Eingänge der einzelnen Addierer ADᵢ jeweils mit den einzelnen Bits bₙ₋₁, bₙ₋₂ ...einer im Zweierkomplement dargestellten Binärzahl B belegt, während dritte Eingänge dieser Addierer jeweils mit den einzelnen Bits dₙ₋₂, dₙ₋₃ ...einer dritten Binärzahl D beschaltet sind. Die Zahl D ist dabei als eine (n-1)-stellige Binärzahl aufzufassen, die durch eine Verdoppelung ihres Vorzeichenbits zu einer n-stelligen Zahl ergänzt ist, wobei die Vorzeichenbits jeweils den dritten Eingängen von ADₙ₋₁ und ADₙ₋₂ zugeführt werden.

Das durch die Addition von A, B und D entstehende Resultat wird entsprechend dem "Carry-Save"-Prinzip durch zwei getrennte Signale angegeben, und zwar durch ein an den Summenausgängen der Addierer ADᵢ bitweise abgreifbares Zwischensummenwort sₙ₋₁, sₙ₋₂, sₙ₋₃ ... s₀ und ein an den Übertragsausgängen von ADᵢ bitweise abgreifbares Übertragswort cₙ, cₙ₋₁, cₙ₋₂ ... c₁. Beide Worte werden nun in einer Addiereinrichtung AS mit einzelnen Addierern ASₙ₋₁, ASₙ₋₂ .... AS₀ zu dem das Resultat von A + B + D darstellenden Summenwort zusammengefaßt. Dazu werden erste Eingänge 11, 12, 13 usw. von AS in herkömmlicher Weise mit den einzelnen Bits sₙ₋₁, sₙ₋₂, sₙ₋₃ usw. des Zwischensummenwortes belegt, zweite Eingänge 21, 22 usw. in herkömmlicher Weise mit den Bits cₙ₋₁, cₙ₋₂ usw. des Übertragswortes. Das höchstwertige Bit cₙ des Übertragswortes wird dabei zunächst vernachlässigt. An den Ausgängen 31, 32, 33 usw. steht dann das Summenwort zur Verfügung.

Eine solche bisher übliche Eingangsbelegung von AS könnte in Fig. 1 durch (dort nicht gezeigte) unmittelbare Verbindungen des das Bit sₙ₋₁ abgebenden Ausgangs von ADₙ₋₁ mit dem Eingang 11 und des cₙ₋₁ abgebende Übertragsausgangs von ADₙ₋₂ mit dem Eingang 21 und durch die eingezeichneten Belegungen von 12, 13 und 22 veranschaulicht werden.

Betrachtet man in einem ersten Zahlenbeispiel mit n = 2 lediglich zweistellige Binärzahlen und nimmt man an, daß A = -2, B = 0 und D = -1, was in der Zweierkomplement-Darstellung bedeutet A = 10, B = 00 und D = 11, so ergibt sich hierbei ein Zwischensummenwort s₁, s₀ = 0, 1 entsprechend dem Wert +1 sowie ein Übertragswort c₂, c₁, cₒ = 1, 0, 0 entsprechend dem Wert -4. Da aber c₂ bei der Addition vernachlässigt werden soll, um nicht eigens hierfür einen weiteren Addierer ASₙ vorsehen zu müssen, haben wir es mit einem Überlaufeffekt zu tun, der bei Weglassung von c₂ zu einem Übertragswort c₁, cₒ = 0, 0 entsprechend dem Wert 0 und damit mit den Teilsummen +1 (aus dem Zwischensummenwort) und 0 (aus dem Übertragswort) zu einem (fehlerhaften) Resultat +1 führt. Würde man jedoch das Übertragswort c₂, c₁, cₒ zulassen, so wäre die Teilsumme aus diesem -4, was ein (richtiges) Resultat von -3 ergäbe.

In einem zweiten Zahlenbeispiel mit n = 2 sollen A = 1, B = 1 und D = -1 betragen. Im Zweierkomplement entspricht das den Zahlen A = 01, B = 01 und D = 11. Die Addition führt dann zu den Teilsummen s₁, s₀ = 1, 1 entsprechend dem Wert -1 und c₁, cₒ = 1, 0 mit dem Wert von -2, d.h. zu dem fehlerhaften Resultat von -3. Nur wenn man wieder c₂ = 0 berücksichtigt, ergibt sich eine Teilsumme c₂, c₁, cₒ, von 0, 1, 0 mit dem Wert von +2 und damit zusammen mit s₁, s₀ das richtige Resultat +1. Läßt man c₂ aber weg, so ist auch hier ein Überlaufeffekt vorhanden.

Erfindungsgemäß ist nun dem höchstwertigen Addierer ADₙ₋₁ ein Korrekturglied 1 nachgeschaltet, das drei Eingänge 2 bis 4 aufweist und das mit dem Addierer ADₙ₋₁ in einer Anordnung ADₖₙ₋₁ integriert ist. Von diesen ist der Eingang 2 mit cₙ belegt, der Eingang 3 mit sₙ₋₁ und der Eingang 4 mit cₙ₋₁. Ein Ausgang 5 des Korrekturgliedes 1 ist mit dem Eingang 21 von AS verbunden, ein zweiter Ausgang 6 mit dem Eingang 11 von AS. Im Korrekturglied 1 werden cₙ und cₙ₋₁ miteinander verglichen. Ergibt sich dabei, daß cₙ ≠ cₙ₋₁ so wird das bei 2 anliegende Übertragsbit cₙ anstelle von sₙ₋₁ auf den Ausgang 6 durchgeschaltet. Nur bei cₙ = cₙ₋₁ wird sₙ₋₁ auf den Ausgang 6 und damit auf den Eingang 11 gelegt. Das insoweit korrigierte Summenbit am Ausgang 6 wird als s₍ₙ₋₁₎ₖ bezeichnet. Der Ausgang 5 ist stets mit cₙ beschaltet, was in Fig. 1 durch eine gestrichelte Verbindung zwischen 2 und 5 angedeutet ist. Damit wird cₙ stets an den Eingang 21 von ASₙ₋₁ durchgeschaltet. Durch diese Maßnahmen gelingt es, die an den Ausgängen der Addierer ADᵢ entstehenden Zwischensummenworte und Übertragsworte beim Auftreten eines Überlaufeffektes so zu korrigieren, daß auch ohne Einsatz eines weiteren Addierers ASₙ in AS das richtige Resultat gebildet wird.

Im Falle des ersten Zahlenbeispiels werden durch das Korrekturglied folgende Korrekturen durchgeführt: c₁ wird ersetzt durch c₂ = 1, so daß sich bei Berücksichtigung des Stellenwertes von c₁ nunmehr hierfür die korrigierte Teilsumme -2 ergibt. Weiterhin beträgt s₁ₖ = 1, so daß das Summenwort s₁ₖ, s₀ zu 1, 1 wird und damit eine korrigierte Teilsumme von -1 ergibt. Beide korrigierten Teilsummen ergeben an den Ausgängen 31, 32 .. ein Summenwort, das dem gewünschten Additionsergebnis von -3 entspricht.

Beim zweiten Zahlenbeispiel ergeben sich durch das Korrekturglied 1 folgende Korrekturmaßnahmen: c₁ wird ersetzt durch c₂ = 0, so daß sich die korrigierte Teilsumme 0 ergibt. Weiterhin ist s₁ₖ = 0, so daß das Summenwort s₁ₖ, s₀ zu 0, 1 wird und damit einer korrigierten Teilsumme von +1 entspricht. Beide korrigierten Teilsummen ergeben dann an den Ausgängen 31, 32 ... ein Summenwort, das dem richtigen Additionsergebnis von +1 entspricht.

Die mittels des Korrekturgliedes 1 vorgenommenen Korrekturmaßnahmen sind auch bei einer Addition von drei- oder mehrstelligen Binärzahlen A, B und D anwendbar, da ja das Übertragsbit cₙ₋₂, das in diesem Fall nicht mehr zu vernachlässigen ist, in die genannten Korrekturmaßnahmen nicht einbezogen werden mußte.

Durch Zwischenspeicher 7, 9, 14 ... und 8, 10 ..., die den Eingängen 11, 12 ... und 21, 22 ... vorgeordnet sind, lassen sich Übertragsbits und Zwischensummenbits der Addierer ADᵢ zwischenspeichern und beim Auftreten eines Taktimpulses gemeinsam auf die Addierer ASᵢ übertragen. Eine solche Anordnung läßt sich in der Weise erweitern, daß die Ausgänge der Register 7, 9, 14 ... und 8, 10... den ersten und zweiten Eingängen einer Zeile von zweiten Addierern ADᵢ' zugeführt werden, wobei die Ausgänge von diesen nachgeordneten Registern 7', 9'... und 8', 10'... mit den Eingängen 11, 12 ... und 21, 22 ... von AS verbunden sind. Andererseits können der Zeile von zweiten Addierern in gleicher Weise aufgebaute Zeilen von dritten und vierten Addierern mit jeweils nachgeschalteten Zwischenspeichern folgen, wobei die Zwischenspeicherausgänge der letzten dieser Addiererzeilen mit den angegebenen Eingängen der Addiereinrichtung AS beschaltet sind. Die Zwischenspeicher werden dabei so getaktet, daß die Zwischensummen und Übertragsworte einer betrachteten Zeile übertragen jeweils gemeinsam auf die nächste Zeile werden, wobei die betrachtete Zeile mit demselben Takt mit den Zwischensummen- und Übertragsworten der vorhergehenden Zeile beaufschlagt wird, die zu einem anderen Additionsvorgang gehören.

Dieses System des schrittweisen Weitergebens der Additionsergebnisse von Zeile zu Zeile und der gleichzeitigen Bearbeitung verschiedener Additionsvorgänge in den einzelnen durch Zwischenspeicher jeweils voneinander getrennten Zeilen wird in der Literatur als "pipelining" bezeichnet. Hierzu sei auf die "IEEE Transactions on Computers", Vol. C-27, No. 9, Sept. 1978, S. 855-865 verwiesen. In jeder Addiererzeile ADᵢ, ADᵢʹ usw. ist dem höchstwertigen Addierer ADₙ₋₁, ADₙ₋₁' usw. erfindungsgemäß jeweils ein Korrekturglied 1, 1' usw. nachgeschaltet, um Additionsfehler infolge von Überlaufeffekten zu vermeiden.

In Fig. 2 ist eine Funktionstabelle für den Addierer ADₙ₋₂ ohne Korrekturglied angegeben, die ebenfalls für die Addierer ADₒ ...ADₙ₋₃ gültig ist. In jeder Zeile sind zunächst die den drei Eingängen dieser Teilschaltung zugeführten Bits aₙ₋₂, bₙ₋₂, dₙ₋₂ aufgeführt und in den letzten beiden Spalten dann jeweils die in Abhängigkeit davon an seinen Ausgängen auftretenden Bits cₙ₋₁ und sₙ₋₂, wobei diese in invertierter Form als cₙ₋₁ und sₙ₋₂ angegeben sind.

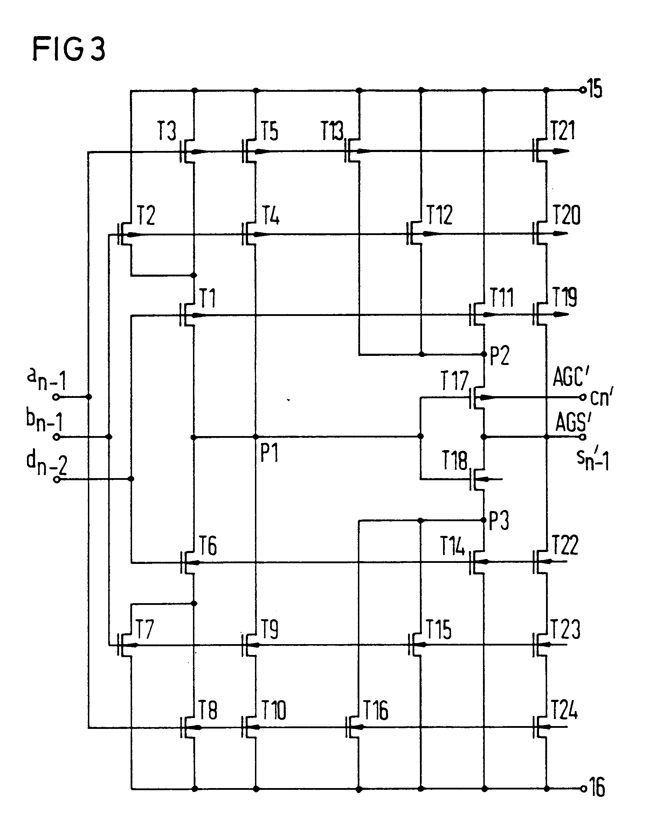

Fig. 3 zeigt ein in CMOS-Technik ausgeführtes Schaltungsbeispiel des Addierers ADₙ₋₁, der den übrigen Addierern ADₒ und A_{Dn-2} nach Aufbau und Wirkungsweise entspricht und der Funktionstabelle nach Figur 2 genügt. Hierbei ist ein Schaltungspunkt P1 über drei jeweils zweigliedrige Transistor-Serienschaltungen mit einem Anschluß 15 verbunden, der mit einer Versorgungsspannung V_{DD} beschaltet ist. Die erste Transistor-Serienschaltung besteht aus den P-Kanal-Schalttransistoren T1 und T2, die zweite aus den P-Kanal-Schalttransistoren T1 und T3 und die dritte aus den P-Kanal-Schalttransitoren T4 und T5. Das Gate von T1 ist über den mit dₙ₋₂ belegten dritten Eingang von ADₙ₋₁ ansteuerbar, die Gates von T2 und T4 über den mit bₙ₋₁ belegten zweiten Eingang und die Gates von T3 und T5 über den mit aₙ₋₁ beschalteten ersten Eingang. Andererseits ist P1 über drei zweigliedrige Transistor-Serienschaltungen mit einem Anschluß 16 verbunden, der mit Bezugspotential beschaltet ist. Diese Serienschaltungen T6 und T7, T6 und T8 sowie T9 und T10 sind jeweils aus N-Kanal-Feldeffekttransistoren aufgebaut. Das Gate von T6 wird mit dₙ₋₂ angesteuert, die Gates von T7 und T9 mit bₙ₋₁ und die Gates von T8 und T10 mit aₙ₋₁. Der Schaltungspunkt P1 entspricht einem Übertragsausgang AGC von ADₙ₋₁, an dem das invertierte Übertragssignal cₙ' abgreifbar ist.

Ein anderer Schaltungspunkt P2 ist über drei P-Kanal-Schalttransistoren T11 bis T13 jeweils mit dem Anschluß verbunden, ein dritter Schaltungspunkt P3 über drei N-Kanal-Schalttransistoren T14 bis T16 mit dem Anschluß 16. Dabei sind T11 und T14 jeweils über dₙ₋₂ ansteuerbar, T12 und T15 jeweils über bₙ₋₁ und T13 und T16 jeweils über aₙ₋₁. Die Schaltungspunkte P2 und P3 sind über die Serienschaltung eines P-Kanal-Schalttransistors T17 und eines N-Kanal-Schalttransistors T18 miteinander verbunden, wobei die Gates von T17 und T18 mit P1 verbunden sind, während der Verbindungspunkt von T17 und T18 einen Ausgang AGS von ADₙ₋₁ darstellt, an dem das invertierte Summenbit sₙ₋₁' auftritt. Dieser letztere Ausgang ist zusätzlich über eine dreigliedrige Serienschaltung von P-Kanal-Schalttransistoren T19 bis T21 mit verbunden und über eine dreigliedrige Serienschaltung von N-Kanal-Schalttransistoren T22 bis T24 mit dem Schaltungspunkt 16. Dabei sind die Gates von T19 und T22 mit dₙ₋₂ ansteuerbar, die Gates von T20 und T23 mit bₙ₋₁ und die Gates von T21 und T24 mit aₙ₋₁.

In Fig. 4 ist eine Funktionstabelle für die höchstwertigen Addierer ADₙ₋₁ und dem integrierten Korrekturglied 1 angegeben. In jeder Zeile sind zunächst die den vier Eingängen dieser Teilschaltung zugeführten Bits aₙ₋₁, bₙ₋₁, dₙ₋₁ und cₙ₋₁, letzteres allerdings in invertierter Form cₙ₋₁, aufgeführt und in den letzten beiden Spalten dann jeweils die in Abhängigkeit davon an den Ausgängen 5 und 6 auftretenden Bits cₙ und s₍ₙ₋₁₎ₖ, wobei diese ebenfalls in invertierter Form als cₙ' und s₍ₙ₋₁₎ₖ' angegeben sind.

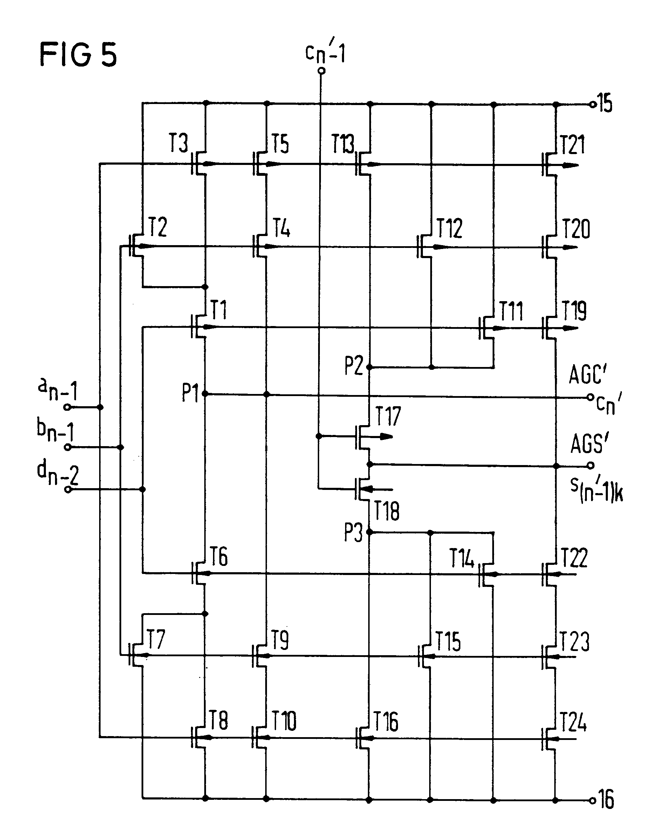

Fig. 5 zeigt ein in CMOS-Technik ausgeführtes Schaltungsbeispiel der aus ADₙ₋₁ und dem Korrekturglied 1 bestehenden Teilschaltung, die der Funktionstabelle nach Fig. 4 genügt. Diese Teilschaltung geht durch geringfügige Abänderungen bzw. Erweiterungen aus der Schaltung nach Fig. 3 hervor. Zu diesem Zweck ist der Ausgang AGC weiterhin mit dem Punkt P1 verbunden. Die Gates der Schalttransistoren T17 und T18 werden in diesem Fall jedoch nicht über Punkt P1 sondern mit dem invertierten Übertragungsbit cₙ₋₁' angesteuert.

### Bezugszeichenliste

- ADₒ...ADₙ₋₃, ADₙ₋₂, ADₙ₋₁: Addierer mit 3 Eingängen und 2 Ausgängen
- aₙₒ...aₙ₋₃, aₙ₋₂, aₙ₋₁: Eingangsbit einer im Zweierkomplement dargestellten Binärzahl A
- bₙₒ...bₙ₋₃, bₙ₋₂, bₙ₋₁: Eingangsbits einer im Zweierkomplement dargestellten Binärzahl B
- dₒ...dₙ₋₃, dₙ₋₂: Eingangsbits einer im Zweierkomplement dargestellten Binärzahl D
- Sₒ...Sₙ₋₃, Sₙ₋₂, Sₙ₋₁: Bits des Zwischensummenrasters
- C₁...Cₙ₋₃, Cₙ₋₂, Cₙ₋₁, Cₙ: Bits des Übergangswortes
- AS: Addiereinrichtung mit n Addierer
- Aₒ,...ASₙ₋₃, ASₙ₋₂, ASₙ₋₁: Addierer mit 2 Eingängen und 1 Ausgang
- 11, 12...1n, 21, 22...2n: Eingang der Addiereinrichtung AS
- 31, 32, ...3n: Ausgänge der Addiereinrichtung
- 1: Korrekturglied
- AD_{Kn-1}: Anordnung: Addierer ADₙ₋₁ mit Korrekturglied 1
- 2, 3, 4: Eingänge des Korrekturglieds 1
- 5, 6: Ausgänge des Korrekturglieds 1
- S(n-1)K: korrigiertes Summenbit am Ausgang des Korrekturglieds 1
- 7, 8, 9, 10, 14: Zwischenspeicher
- T1, T2...T5, T11, T12, T13, T17, T19...T21: P-Kanal-Schalttransistor
- T6, T7...T10, T14, T15, T16, T18, T22...T24: N-Kanal-Schalttransistor
- Cn', AGC: invertiertes Übertragsbit cn
- C_{n-1'}: invertiertes Übertragsbit Cₙ₋₁
- Sₙ₋₁, AGS', AGS: invertiertes Summenbit Sₙ₋₁
- Sₙ₋₂: invertiertes Summenbit Sₙ₋₂
- P1, P2, P3: Potentialpunkte
- 15: Versorgungsspannung V_{DD}
- 16: Bezugspotential

## Patentansprüche

1. Anordnung zur bitparallelen Addition von Binärzahlen im Zweierkomplement mit Carry-Save Überlaufkorrektur mit einer Gruppe von ersten Addierern (ADᵢ), die jeweils Eingänge für Binärzahlenbits gleicher Wertigkeit sowie einen Summen- und einen Übertragsausgang zur Abgabe eines Zwischensummen- und eines Übertragsbits aufweisen, und mit einer Addiereinrichtung (AS) zur Bildung eines Summenwortes aus einem aus Übertragsbits bestehenden Übertragswort und einem aus Zwischensummenbits bestehenden Zwischensummenwort, bei der das Übertragsbit (cₙ₋₁) des ersten Addierers (ADₙ₋₂) mit der zweithöchsten Wertigkeit durch das Übertragsbit (cₙ) des höchstwertigen ersten Addierers (ADₙ₋₁) ersetzt wird und der höchstwertige erste Addierer (ADₙ₋₁) ein Korrekturglied (1) hat, in dem das Zwischensummenbit (sₙ₋₁) dieses Addierers für den Fall, daß die Übertragsbits (cₙ, cₙ₋₁) der beiden höchstwertigen ersten Addierer (ADₙ₋₁, ADₙ₋₂) ungleich sind, durch das Übertragsbit (cₙ) des höchstwertigen ersten Addierers (ADₙ₋₁) ersetzt wird, bei der der höchstwertige erste Addierer (ADₙ₋₁) und das Korrekturglied (1) in einer Anordnung (ADₖₙ₋₁) integriert sind, wobei der höchstwertige erste Addierer (ADₙ₋₁) mit integriertem Korrekturglied (1) in der Weise aufgebaut ist, daß ein erster Schaltungspunkt (P1) über drei jeweils zweigliedrige Serienschaltungen von Feldeffekttransistoren eines ersten Kanaltyps (T1, T2; T1, T3; T4, T5) mit einem ersten Anschluß (15) verbunden ist, der mit einer Versorgungsspannung belegt ist, daß der erste Schaltungspunkt (P1) über drei jeweils zweigliedrige Serienschaltungen von Feldeffekttransistoren eines zweiten Kanaltyps (T6, T7; T6, T8; T9, T10) mit einem zweiten Anschluß (16) verbunden ist, der auf Bezugspotential liegt, daß ein zweiter Schaltungspunkt (P2) über drei Feldeffekttransistoren des ersten Kanaltyps (T11, T12, T13) mit dem ersten Anschluß (15) verbunden ist, daß ein dritter Schaltungspunkt (P3) über drei Feldeffekttransistoren des zweiten Kanaltyps (T14, T15, T16) mit dem zweiten Anschluß (16) beschaltet ist, daß der zweite Schaltungspunkt (P2) über einen Feldeffekttransistor des ersten Kanaltyps (T17) mit einem inversen Summenausgang (AGS') des Korrekturgliedes (1) verbunden ist, daß der dritte Schaltungspunkt (P3) über einen Feldeffekttransistor des zweiten Kanaltys (T18) mit diesem inversen Summenausgang (AGS') verbunden ist, daß die Gates der Transistoren der zweigliedrigen Serienschaltungen über drei Eingänge des ersten Addierers so ansteuerbar sind, daß Signale an jeweils zwei der drei Eingänge jeweils eine dieser Serienschaltungen aus Transistoren des ersten Kanaltyps in den leitenden Zustand schalten, wobei inverse Signale an den zuletzt betrachteten zwei Eingängen jeweils eine der drei zweigliedrigen Serienschaltungen aus Transistoren des zweiten Kanaltyps in den leitenden Zustand schalten, daß die Gates der drei Feldeffekttransistoren des ersten Kanaltyps, die zwischen dem zweiten Schaltungspunkt (P2) und dem ersten Anschluß (15) liegen, und die Gates der drei Feldeffekttransistoren des zweiten Kanaltyps, die zwischen dem dritten Schaltungspunkt (P3) und dem zweiten Anschluß (16) angeordnet sind, jeweils mit einem der Eingänge des Addierers verbunden sind, daß der erste Schaltungspunkt (P1) mit einem inversen Übertragsausgang (AGC') des ersten Addierers verbunden ist und daß der inverse Summenausgang (AGS') des Korrekturgliedes (1) über eine dreigliedrige Serienschaltung von Feldeffekttransistoren des ersten Kanaltyps (T19, T20, T21) mit dem ersten Anschluß (15) und über eine dreigliedrige Serienschaltung von Feldeffekttransistoren des zweiten Kanaltyps (T22, T23, T24) mit dem zweiten Anschluß (16) verbunden ist, wobei die Feldeffekttransistoren jeder dieser Serienschaltungen jeweils über einen Eingang des Addierers ansteuerbar sind, daß die Gates der Feldeffekttransistoren (T17, T18), über die der zweite (P2) und der dritte Schaltungspunkt (P3) mit dem inversen Summenausgang (AGS') des Korrekturgliedes (1) verbunden sind, mit einem inversen Übertragsausgang (cₙ₋₁') des ersten Addierers der nächstniedrigeren Wertigkeit beschaltet sind und daß der höchstwertige erste Addierer (ADₙ₋₁) einschließlich des Korrekturgliedes (1) sowie die übrigen ersten Addierer (AD₀ ... ADₙ₋₂) jeweils die gleiche Anzahl von Transistoren haben.

## Claims

1. Arrangement for the bit-parallel addition of binary numbers in two's complement with carry-save overflow correction, having a group of first adders (ADᵢ) which have in each case inputs for binary number bits of the same significance as well as a sum output and a carry output for the output of an intermediate sum bit and a carry bit, and having an adder device (AS) for forming a sum word from a carry word comprising carry bits and an intermediate sum word comprising intermediate sum bits, in which the carry bit (cₙ₋₁) of the first adder (ADₙ₋₂) having the second highest significance is replaced by the carry bit (cₙ) of the most significant first adder (ADₙ₋₁) and the most significant first adder (ADₙ₋₁) has a correction element (1) in which, if the carry bits (cₙ, cₙ₋₁) of the two most significant first adders (ADₙ₋₁, ADₙ₋₂) are not equal, the intermediate sum bit (sₙ₋₁) of said adder is replaced by the carry bit (cₙ) of the most significant first adder (ADₙ₋₁), in which the most significant first adder (ADₙ₋₁) and the correction element (1) are integrated in an arrangement (ADₖₙ₋₁), the most significant first adder (ADₙ₋₁) with integrated correction element (1) being constructed in such a way that a first circuit point (P1) is connected via three, in each case two-element series circuits of field effect transistors of a first channel type (T1, T2; T1, T3; T4, T5) to a first terminal (15) which is connected to a supply voltage, that the first circuit point (P1) is connected via three, in each case two-element series circuits of field effect transistors of a second channel type (T6, T7; T6, T8; T9, T10) to a second terminal (16) which is connected to reference potential, that a second circuit point (P2) is connected via three field effect transistors of the first channel type (T11, T12, T13) to the first terminal (15), that a third circuit point (P3) is connected via three field effect transistors of the second channel type (T14, T15, T16) to the second terminal (16), that the second circuit point (P2) is connected via a field effect transistor of the first channel type (T17) to an inverse sum output (AGS') of the correction element (1), that the third circuit point (P3) is connected via a field effect transistor of the second channel type (T18) to said inverse sum output (AGS'), that the gates of the transistors of the two-element series circuits can be driven via three inputs of the first adder in such a way that signals at in each case two of the three inputs switch in each case one of said series circuits of transistors of the first channel type into the conductive state, inverse signals at the last-mentioned two inputs switching in each case one of the three, two-element series circuits of transistors of the second channel type into the conductive state, that the gates of the three field effect transistors of the first channel type located between the second circuit point (P2) and the first terminal (15), and the gates of the three field effect transistors of the second channel type arranged between the third circuit point (P3) and the second terminal (16) are connected in each case to one of the inputs of the adder, that the first circuit point (P1) is connected to an inverse carry output (AGC') of the first adder, and that the inverse sum output (AGS') of the correction element (1) is connected via a three-element series circuit of field effect transistors of the first channel type (T19, T20, T21) to the first terminal (15) and via a three-element series circuit of field effect transistors of the second channel type (T22, T23, T24) to the second terminal (16), it being possible to drive the field effect transistors of each of said series circuits via one input of the adder in each case, that the gates of the field effect transistors (T17, T18), via which the second (P2) and the third circuit point (P3) are connected to the inverse sum output (AGS') of the correction element (1), are connected to an inverse carry output (cₙ₋₁') of the first adder of the next lower significance, and that the most significant first adder (ADₙ₋₁) including the correction element (1) and the other first adders (AD₀ ... ADₙ₋₂) have the same number of transistors in each case.

## Revendications

1. Dispositif pour l'addition, en parallèle au niveau des bits, de nombres binaires selon le mode de complémentation à deux avec une correction de dépassement de capacité Carry-Save, comportant un groupe de premiers additionneurs (ADᵢ), qui possèdent respectivement des entrées pour des bits de chiffres binaires de même poids ainsi qu'une sortie de somme et une sortie de report pour la délivrance d'un bit de somme intermédiaire et d'un bit de report, et comportant un dispositif additionneur (AS) pour former un mot de somme à partir d'un mot de report constitué par des bits de report et un mot de somme intermédiaire constitué par des bits de somme intermédiaire, et dans lequel le bit de report (cₙ₋₁) du premier additionneur (ADₙ₋₂) possédant le poids maximum en second est remplacé par le bit de report (cₙ) du premier additionneur (ADₙ₋₁) possédant le poids maximum, et le premier additionneur (ADₙ₋₁) de poids maximum possède un circuit de correction (1), dans lequel le bit de somme intermédiaire (sₙ₋₁) de cet additionneur est remplacé par le bit de report (cₙ) du premier additionneur (ADₙ₋₁) de poids maximum, dans le cas où les bits de report (cₙ, cₙ₋₁) des deux premiers additionneurs (ADₙ₋₁, ADₙ₋₂) possédant les poids maximum sont différents, et dans lequel le premier additionneur (ADₙ₋₁) de poids maximum et le circuit de correction (1) sont intégrés dans un dispositif (ADₖₙ₋₁), le premier additionneur (ADₙ₋₁) de poids maximum équipé du circuit de correction intégré (1) étant agencé de telle sorte qu'un premier point (P1) du circuit est raccordé, par l'intermédiaire de trois circuits séries respectifs formés chacun de deux éléments et comprenant des transistors à effet de champ possédant un premier type de canal (T1,T2; T1,T3; T4,T5), à une première borne (15), qui est placée à une tension d'alimentation, que le premier point (P1) du circuit est raccordé, par l'intermédiaire de trois circuits série respectifs formés de deux composants et constitués par des transistors à effet de champ possédant un second type de canal (T6,T7; T6,T8; T9,T10), à une seconde borne (16), qui est placée au potentiel de référence, qu'un second point (P2) du circuit est raccordé, par l'intermédiaire de trois transistors à effet de champ possédant le premier type de canal (T11,T12,T13), à une première borne (15), qu'un troisième point (P3) du circuit est raccordé, par l'intermédiaire de trois transistors à effet de champ possédant le second type de canal (T14,T15,T16), à la seconde borne (16), que le second point (P2) du circuit est raccordé, par l'intermédiaire d'un transistor à effet de champ possédant le premier type de canal (T17), à une sortie de somme inverse (AGS') du circuit de correction (1), que le troisième point (P3) du circuit est raccordé, par l'intermédiaire d'un transistor à effet de champ possédant le second type de canal (T18), à cette sortie de somme inverse (AGS'), que les grilles des transistors des circuits série formés de deux éléments peuvent être commandées par l'intermédiaire de trois entrées du premier additionneur de telle manière que des signaux appliqués respectivement à deux des trois entrées placent à l'état conducteur respectivement l'un de ces circuits série formés de transistors possédant le premier type de canal, des signaux inverse présents aux deux entrées indiquées en dernier lieu plaçant à l'état conducteur respectivement l'un des trois circuits série formés de deux éléments et constitués par des transistors possédant le second type de canal, que les grilles des trois transistors à effet de champ possédant le premier type de canal, qui sont situées entre le second point (P2) du circuit et la première borne (15), et les grilles des trois transistors à effet de champ possédant le second type de canal, qui sont disposées entre le troisième point (P3) du circuit et la seconde borne (16), sont raccordées respectivement à l'une des entrées de l'additionneur, que le premier point (P1) du circuit est raccordé à une sortie de report inverse (AGC') du premier additionneur, et que la sortie de somme inverse (AGS') du circuit de correction (1) est raccordée, par l'intermédiaire d'un circuit série formé de trois éléments et constitué par des transistors à effet de champ possédant le premier type de canal (T19,T20,T21), à la première borne (15) et, par l'intermédiaire d'un circuit série formé de trois éléments et constitué par les transistors à effet de champ possédant le second type de canal (T22,T23,T24) à la seconde borne (16), les transistors à effet de champ de chacun de ces circuits série pouvant être commandés respectivement par l'intermédiaire d'une entrée de l'additionneur, que les grilles des transistors à effet de champ (T17,T18), par l'intermédiaire desquelles le second point (P2) et le troisième point (P3) du circuit sont raccordées à la sortie de somme inverse (AGS') du circuit de correction (1), sont connectées à une sortie de report inverse (cₙ₋₁') du premier additionneur possédant le poids immédiatement inférieur et que le premier additionneur (ADₙ₋₁) possédant le poids maximum possède, y compris le circuit de correction (1) ainsi que les autres premiers additionneurs (AD₀ ... ADₙ₋₂), respectivement le même nombre de transistors.
